# EUROPÄISCHE PATENTANMELDUNG

(11) **EP 3 869 669 A1**
(43) Veröffentlichungstag der Anmeldung: **25.08.2021**
(21) Anmeldenummer: 21153999.4
(22) Anmeldetag: 28.01.2021
(51) Int. Cl.: H02K 1/14, H02K 1/18, H02K 1/20, H02K 3/34, H02K 9/02

(54) **WÄSCHEPFLEGEGERÄT MIT ELEKTRISCHEM ANTRIEB**

(30) Priorität: 24.02.2020 DE 102020202337
(71) Anmelder: BSH Hausgeräte GmbH, 81739 München (DE)
(72) Erfinder: Korneluk, Pawel, 10585 Berlin (DE); Seubert, Joachim, 97450 Arnstein (DE); Walter, Axel, 14621 Schönwalde-Glien (DE)

(57) **Zusammenfassung**

Die vorliegende Erfindung betrifft ein Wäschepflegegerät (600) umfassend einen elektrischen Antrieb (610) mit einem mit stromführenden Wicklungen (401) ausgestatteten Stator (400) zum Aufbau eines rotierenden Magnetfeldes zum Antreiben eines entlang einer Rotationsachse (z) rotierbaren magnetischen Rotors (510), wobei der Stator (400) aus einem Blechpaket (200b) aus entlang der Rotationsachse (z) übereinander gestapelten Blechen (201) aufgebaut ist, wobei die Bleche (201) an ihren jeweiligen Oberseiten mit Isolationsschichten (202) überzogen sind, welche die Bleche (201) des Blechpakets (200b) untereinander elektrisch isolieren. Die Bleche (201) des Blechpakets (200b) variieren in axialer Richtung (z) zwischen einem ersten Blechquerschnitt (Q1) und einem zweiten Blechquerschnitt (Q2), so dass sich eine rillenförmige Außenkontur (204) des Blechpakets (200b) ausformt.

## Beschreibung

Die vorliegende Erfindung betrifft ein Wäschepflegegerät mit einem elektrischen Antrieb, der einen Stator umfasst, welcher aus einem Blechpaket aus übereinander gestapelten Blechen aufgebaut ist. Die Erfindung betrifft ferner einen derartigen elektrischen Antrieb für ein Wäschepflegegerät.

Bei einem herkömmlichen Wäschepflegegerät, z.B. einer Waschmaschine, wird ein elektrischer Antrieb eingesetzt, um für die notwendige mechanische Bewegung, beispielsweise der Trommel zu sorgen. Ein herkömmlicher elektrischer Antrieb besteht im Kern aus einem Elektromotor mit Stator und Rotor, wobei auch weitere Mechanische Kraftübertragungselemente eine Rolle spielen können. Z.B. Riemen, Ritzel und die Riemenscheibe.

Die Druckschrift EP 2 568 579 A2 beschreibt eine Waschmaschine mit einem Elektromotor, der aus einem Stator und einem Rotor besteht. Der Stator besteht aus einer Mehrzahl von Stator-Zähnen (auch Stator-Kerne genannt), die kreisförmig angeordnet sind, und aus Spulen, die um die Stator-Zähne gewickelt sind. Alle diese Stator-Zähne sind über das Joch des Stators miteinander verbunden und stellen damit eine Lamelle eines Bleches dar und im Paket zusammengestanzt ergibt das Gesamtgebilde ein StatorKern/Stator-Paket. Der Rotor ist drehbar innerhalb oder außerhalb des Stators angeordnet.

Der Stator wird üblicherweise als Stator-Paket aus einzelnen Blechen gefertigt. Es wird derzeit versucht, einen Großteil der Verluste in axialer Richtung zu den Endschildern des Motors abzuführen, um damit den passiven Kühleffekt des Motors zu erreichen.

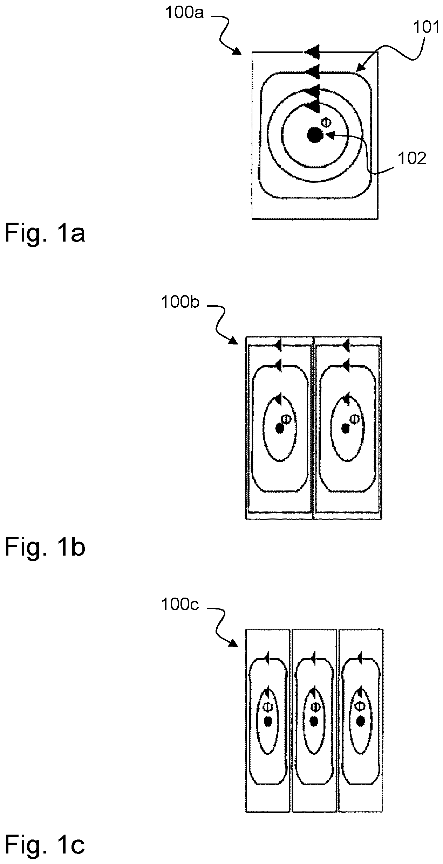

Problematisch dabei ist die elektrische Isolationsschicht zwischen den Blechen, welche notwendig ist, um Wirbelstromverluste zu vermeiden, wie in den Figuren 1a bis 1c dargestellt. Je schmaler die Bleche sind, desto kleiner deren Querschnittsfläche, so dass der senkrecht zur Querschnittsfläche fließende magnetische Fluss kleinere Wirbelströme induziert. Diese Isolationsschicht ist jedoch tendenziell weniger leitfähig für Wärme, so dass eine axiale Wärmeabfuhr durch ein Blechpaket schwieriger von statten geht. Zudem kann beim Stanzen der Bleche ein Stanzgrat an den Seiten entstehen, so dass Bleche kurzgeschlossen werden können.

Es ist die der Erfindung zugrundeliegende Aufgabe, den Wirkungsgrad eines elektrischen Antriebs für ein Wäschepflegegerät zu erhöhen.

Ferner ist es eine Aufgabe der Erfindung, einen kostengünstigeren elektrischen Antrieb zu schaffen, der weniger Material benötigt, um dieselben Temperaturgrenzen einzuhalten.

Insbesondere ist es die Aufgabe der Erfindung, ein Konzept für eine verbesserte Wärmeabfuhr des elektrischen Antriebs eines Wäschepflegegeräts zu schaffen.

Insbesondere ist es die Aufgabe der Erfindung, ein Blechpaket für einen Stator eines elektrischen Antriebs zu schaffen, bei dem die oben genannten Probleme vermieden werden können und bei dem eine verbesserte Wärmeabfuhr in radialer Richtung realisiert werden kann, sodass die Endschilder weniger Wärme abführen müssen, und bei dem generell die Wärmeabfuhr besser ausgenutzt wird als in axialer Richtung.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Eine wesentliche Idee der Erfindung besteht darin, die Oberfläche des Stators des elektrischen Antriebs zu vergrößern, um damit eine verbesserte Wärmeabfuhr zu gewährleisten und somit den Wirkungsgrad zu erhöhen oder Kosten zu senken, da man weniger Material benötigt, um die Temperaturgrenzen einzuhalten.

Insbesondere wird eine solche Oberflächenvergrößerung dadurch erreicht, dass die Blechquerschnitte des Blechpakets, welches den Stator ausformt, abwechselnd an der Außenkontur größer und kleiner realisiert werden, so dass ein Überstand von einem Blech zum anderen entsteht. Damit entsteht eine rillenförmige Oberfläche an den Seiten des Blechpakets, welche zu der besagten Oberflächenvergrößerung führt.

Damit ergeben sich die folgenden technischen Vorteile: Zum einen verbesserte Wärmeabfuhr und damit Reduktion der Temperatur sowie der Verluste in den Wicklungen. Zum anderen, bei gleicher Rillenfertigung im Inneren der Nut, wo die Wicklungen eingelegt werden, sowie der durch Kunststoff eingespritzten Nutisolation, anstatt einer Folie, kann ebenfalls die thermische Kopplung zwischen der Stromführenden Wicklung, ein wesentlicher Verlusterzeuger eines Elektromotors, und dem Blechpaket des Stators verbessert werden, was wiederum die Kühlwirkung und Verlustreduktion verstärkt.

Der sich aufgrund der Oberflächenvergrößerung ergebende kleinere effektive Nutraum kann mit der Breite der Zähne und der Ausformung der Rillen entsprechend abgestimmt werden, um einen optimalen Kompromiss zwischen Wärmeabfuhr und magnetischer Flussleitfähigkeit, insbesondere in den flusstragenden Bereichen des Stators, zu erzielen.

Eine reduzierte Erwärmung des Motors führt zu einer höheren Leistungsfähigkeit, was Vorteile bzgl. Energielabel, Marketing, etc. mit sich bringt. Aufgrund der Reduktion des Aktivmaterials können bei gleicher Erwärmung die Fertigungskosten reduziert werden.

Gemäß einem ersten Aspekt wird die erfindungsgemäße Aufgabe durch ein Wäschepflegegerät gelöst, umfassend einen elektrischen Antrieb mit einem mit stromführenden Wicklungen ausgestatteten Stator zum Aufbau eines rotierenden Magnetfeldes zum Antreiben eines entlang einer Rotationsachse rotierbaren magnetischen Rotors, wobei der Stator aus einem Blechpaket aus entlang der Rotationsachse übereinander gestapelten Blechen aufgebaut ist, wobei die Bleche an ihren jeweiligen Oberseiten mit Isolationsschichten überzogen sind, welche die Bleche des Blechpakets untereinander elektrisch isolieren, wobei die Bleche des Blechpakets in axialer Richtung zwischen einem ersten Blechquerschnitt und einem zweiten Blechquerschnitt variieren, so dass sich eine rillenförmige Außenkontur des Blechpakets ausformt.

Aufgrund der rillenförmigen Außenkontur, welche durch die spezielle Anordnung der Bleche mit variierendem Querschnitt erreicht wird, ergibt sich aufgrund der erhöhten äußeren Oberfläche eine verbesserte Wärmeabfuhr durch den Stator in radialer Richtung. Damit kann die Erwärmung des Antriebs reduziert werden, so dass sich ein verbesserter Wirkungsgrad einstellt.

Gemäß einer beispielhaften Ausführungsform des Wäschepflegegeräts variieren die Bleche des Blechpakets an der Außenkontur abwechselnd zwischen dem ersten Blechquerschnitt und dem zweiten Blechquerschnitt, so dass ein Überstand von einem Blech mit dem ersten Blechquerschnitt zu einem darauf folgenden Blech mit dem zweiten Blechquerschnitt entsteht.

Dadurch wird der technische Vorteil erreicht, dass es zu einer verbesserten Wärmeabfuhr insbesondere in radialer Richtung kommt aufgrund der durch diese spezielle Blechanordnung stark erhöhten Oberfläche, welche ebenfalls zur Reduktion der Erwärmung dient.

Gemäß einer beispielhaften Ausführungsform des Wäschepflegegeräts ist der erste Blechquerschnitt größer als der zweite Blechquerschnitt.

Dadurch wird der technische Vorteil erreicht, dass sich die Oberfläche des Blechpakets vergrößert, was einer besseren Wärmeabfuhr bzw. besseren Kühlung des Antriebs dient.

Gemäß einer beispielhaften Ausführungsform des Wäschepflegegeräts weist das Blechpaket eine kreisförmige Innenkontur auf, mit einer entlang der Innenkontur ausgebildeten Mehrzahl von Zähnen, auf welchen die Wicklungen aufgebracht sind, wobei die Zähne durch jeweilige Nuten voneinander beabstandet sind, in denen die Wicklungen eingebracht sind, wobei die Bleche des Blechpakets im Bereich der Nuten eine rillenförmige Innenkontur des Blechpakets ausformen.

Dadurch wird der technische Vorteil erreicht, dass eine bessere thermische Anbindung der Wicklung an das Stator-Paket im Nutbereich erfolgen kann.

Gemäß einer beispielhaften Ausführungsform des Wäschepflegegeräts sind Rillen der Außenkontur des Blechpakets tiefer als Rillen der Innenkontur des Blechpakets.

Dadurch wird der technische Vorteil erreicht, dass die Rillen die Wärmeabfuhr in radialer Richtung verstärken.

Die Rillen im Inneren der Nut werden sich womöglich flacher ergeben als außen, da ein Kompromiss zwischen dem benötigten Raum für die Stator-Zähne und dem Raum für die Nut und damit für die Wicklung zusammen mit dem Vorteil der Wärmeabfuhr gefunden werden muss. Und außen am Stator bzw. an der Kante, die nicht zu der Wicklung gerichtet ist, gibt es generell weniger zu beachten, wodurch die Rillen auch tiefer ausfallen könnten. Die Wärme entsteht im Inneren der Nut und fließt damit immer zu kühleren Bereichen hin ab, und das unabhängig von den Rillen. Somit verstärken die Rillen die Wärmeabfuhr in radialer Richtung.

Gemäß einer beispielhaften Ausführungsform des Wäschepflegegeräts stehen eine Tiefe der Rillen an der rillenförmigen Innenkontur des Blechpakets, eine Breite der Zähne und ein Nutraum im Bereich der Nuten in einem vorbestimmten Verhältnis zueinander, das zu einem optimalen Kompromiss zwischen Wärmeabfuhr und magnetischer Flussleitfähigkeit führt.

Dadurch wird der technische Vorteil erreicht, dass der elektrische Antrieb so entworfen werden kann, dass er einen optimalen magnetischen Fluss bei optimaler Wärmeabfuhr ermöglicht. Mit einem solche Design kann ein Leistungsgrad des Motors optimal eingestellt werden.

Gemäß einer beispielhaften Ausführungsform des Wäschepflegegeräts ist die rillenförmige Innenkontur im Bereich der Nuten des Blechpakets mit einer Isolationsschicht umspritzt, welche die in die Nuten eingebrachten Wicklungen gegenüber dem Blechpaket isoliert.

Dadurch wird der technische Vorteil erreicht, dass eine bessere thermische Anbindung der Wicklung an das Stator-Paket bei gleichzeitig hoher elektrischer Isolierung erzielt werden kann.

Gemäß einer beispielhaften Ausführungsform des Wäschepflegegeräts ist die Isolationsschicht in die Rillen der Innenkontur gespritzt und dichtet das Blechpaket im Bereich der Nuten luftdicht ab. Damit verbessert sich eine thermische Kopplung zwischen den Wicklungen und den Blechen des Blechpakets.

Dadurch wird der technische Vorteil erreicht, dass es zu keinem Einschluss von Luftbläschen kommt, wie sie z.B. beim Aufbringen einer Isolationsfolie entstehen können. Damit wird der Wärmeübergang im Bereich der Nuten verbessert.

Gemäß einer beispielhaften Ausführungsform des Wäschepflegegeräts sind die Bleche des Blechpakets in axialer Richtung abwechselnd aus einem viereckigen Blechstück mit abgestumpften Ecken und einem viereckigen Blechstück mit nicht abstumpften Ecken oder weniger abgestumpften Ecken ausgebildet. Unter dem Begriff "weniger abgestumpften Ecken" sind alle Zwischenformen gemeint, wobei die ganze Ecke einen Grenzfall darstellt.

Dadurch wird der technische Vorteil erreicht, dass sich die Oberfläche zur Wärmeabfuhr stark erhöht, was zu einem verbesserten Leistungsgrad der Maschine führt.

Gemäß einer beispielhaften Ausführungsform des Wäschepflegegeräts weist der elektrische Antrieb ein Lagerendschild auf, das den Stator kopfseitig umhüllt, wobei das Lagerendschild stirnseitig in das Blechpaket des Stators greift und das Blechpaket über eine Flanschverbindung fixiert, wobei die Bleche des Blechpakets außerhalb des Bereichs der Flanschverbindung eine rillenförmige Außenkontur ausformen.

Dadurch wird der technische Vorteil erreicht, dass die rillenförmige Außenkontur den Wärmeübergang verbessert, aber gleichzeitig nicht die Festigkeit der Flanschverbindung beeinträchtigt.

Gemäß einer beispielhaften Ausführungsform des Wäschepflegegeräts formen die Bleche des Blechpakets im Bereich der Flanschverbindung eine ebene Außenkontur aus.

Dies ist notwendig, um die Stabilität der Flanschverbindung beizubehalten, auch wenn es den Kühleffekt in dem Flanschbereich reduziert.

Gemäß einer beispielhaften Ausführungsform des Wäschepflegegeräts formen die Bleche des Blechpakets sowohl im Bereich der Flanschverbindung als auch außerhalb des Bereichs der Flanschverbindung eine rillenförmige Außenkontur aus. Im Flanschbereich sollten aber sehr kleine Rillen vorhanden sein, damit die Blechlamellen nicht durch die Flansche verbogen oder zusammengedrückt werden können.

Dadurch wird der technische Vorteil erreicht, dass es zu einer weiteren Verbesserung der Wärmeabfuhr zur Außenluft kommt, ohne dass die rillenförmige Außenkontur im Bereich der Flanschverbindung die Festigkeit der Flanschverbindung signifikant reduziert.

Gemäß einer beispielhaften Ausführungsform des Wäschepflegegeräts ist eine Rillentiefe der rillenförmigen Außenkontur im Bereich der Flanschverbindung weniger tief als eine Rillentiefe außerhalb des Bereichs der Flanschverbindung.

Dadurch wird der technische Vorteil erreicht, dass ein Kompromiss zwischen Festigkeit der Flanschverbindung und Höhe der Wärmeabfuhr erzielt werden kann. Je nach Design können verschiedene Prioritäten gesetzt werden.

Gemäß einer beispielhaften Ausführungsform des Wäschepflegegeräts weisen die Bleche des Blechpakets im Bereich der Flanschverbindung abgestumpfte Ecken auf, in welche das Lagerendschild greift, und außerhalb des Bereichs der Flanschverbindung nicht abgestumpfte Ecken oder abwechselnd weniger abgestumpfte Ecken.

Dadurch wird der technische Vorteil erreicht, dass die Flanschverbindung aufgrund der abgestumpften Ecken besonders fest ist. Durch die nicht abgestumpften Ecken außerhalb des Bereichs der Flanschverbindung wird dagegen die Oberfläche für die Wärmeabfuhr vergrößert, so dass sich der Wirkungsgrad des Motors steigern lässt.

Gemäß einem zweiten Aspekt wird die erfindungsgemäße Aufgabe gelöst durch einen elektrischen Antrieb für ein Wäschepflegegerät, wobei der elektrische Antrieb folgendes umfasst: einen mit stromführenden Wicklungen ausgestatteten Stator zum Aufbau eines rotierenden Magnetfeldes; und einen entlang einer Rotationsachse rotierbaren magnetischen Rotor, der durch das rotierende Magnetfeld des Stators angetrieben wird, wobei der Stator aus einem Blechpaket entlang der Rotationsachse übereinander gestapelter Bleche aufgebaut ist, wobei die Bleche an ihren jeweiligen Oberseiten mit Isolationsschichten überzogen sind, welche die Bleche des Blechpakets untereinander elektrisch isolieren, wobei die Bleche des Blechpakets in axialer Richtung zwischen einem ersten Blechquerschnitt und einem zweiten Blechquerschnitt variieren, so dass sich eine rillenförmige Außenkontur des Blechpakets ausformt.

Bei einem solchen Antrieb ergibt sich aufgrund der rillenförmigen Außenkontur, welche durch die spezielle Anordnung der Bleche mit variierendem Querschnitt erreicht wird, eine verbesserte Wärmeabfuhr durch den Stator sowohl in axialer als auch radialer Richtung. Damit kann die Erwärmung des Antriebs reduziert werden, so dass sich ein verbesserter Wirkungsgrad einstellt.

Ausführungsbeispiele der Erfindung sind in den Zeichnungen dargestellt und werden im Folgenden näher beschrieben.

Es zeigen:
- Fig. 1a) bis c): schematische Darstellungen unterschiedlicher Blechstapelschichten 100a, 100b, 100c mit eingezeichneten Wirbelströmen in der Zeichenebene und dem magnetischen Fluss aus der Zeichenebene heraus;
- Fig. 2a: eine grafische Darstellung einer herkömmlichen Paketierung 200a von Elektroblech des Stators mit eingezeichneten Stanzgratbereichen 203;
- Fig. 2b: eine grafische Darstellung eines erfindungsgemäßen Blechpakets 200b von Elektroblech des Stators gemäß einer beispielhaften Ausführungsform;
- Fig. 3a: eine grafische Darstellung eines erfindungsgemäßen Stator-Blechpakets 300a mit abgestumpften Ecken 304 gemäß einer beispielhaften Ausführungsform;
- Fig. 3b: eine grafische Darstellung eines erfindungsgemäßen Stator-Blechpakets 300b mit nicht abgestumpften Ecken 305 gemäß einer beispielhaften Ausführungsform;
- Fig. 4: eine grafische Darstellung eines erfindungsgemäßen Stators 400 mit Blechpaket 200b und elektrisch leitfähigen Wicklungen 401 gemäß einer beispielhaften Ausführungsform;
- Fig. 5: eine Schnittdarstellung eines erfindungsgemäßen elektrischen Antriebs 500 mit Stator 400 aus Stator-Blechpaket 200b und stromführenden Wicklungen 401, Rotormagnet 510, Antriebswelle 511, nicht gerilltem Rotorblech zwischen Rotormagnet 510 und Antriebswelle 511 und Lagerendschild 501 gemäß einer beispielhaften Ausführungsform; und
- Fig. 6: eine schematische Darstellung eines Wäschepflegegeräts 600 mit elektrischem Antrieb 610 gemäß einer beispielhaften Ausführungsform

Fig. 1a) bis c) zeigen schematische Darstellungen unterschiedlicher Blechstapelschichten 100a, 100b, 100c mit eingezeichneten Wirbelströmen 101 in der Zeichenebene und dem magnetischen Fluss 102 aus der Zeichenebene heraus.

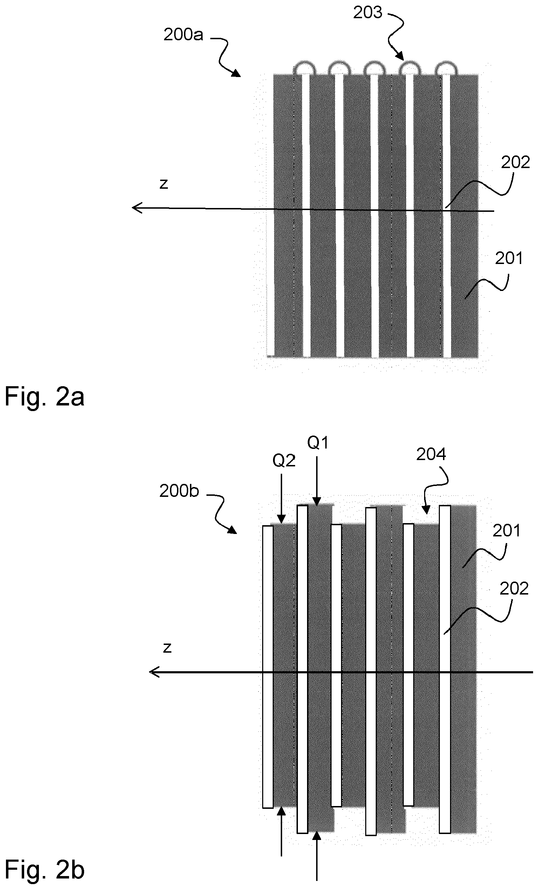

Dabei zeigen Figur 1a ein Blechpaket 100a, das aus einem einzigen Blech gefertigt ist, Figur 1b ein Blechpaket 100b, das aus zwei Blechen gefertigt ist, und Figur 1c ein Blechpaket 100c, das aus drei Blechen gefertigt ist. Die Querschnitte der Bleche reduzieren sich jeweils von Figur 1a zu Figur 1c, d.h. sie werden von Figur 1a zu Figur 1c hin schmaler, wobei die äußeren Dimensionen der Blechpakete 100a, 100b, 100c in etwa gleichbleiben. Je mehr Bleche mit geringerem Querschnitt verwendet werden, um ein jeweiliges Blechpaket zu fertigen, umso kleiner werden die erzeugten Wirbelströme 101, da diese nur einen geringeren Raum haben, in dem sie sich entfalten können, und sich damit der elektrische Widerstand in Wirbelstromrichtung erhöht. Zwischen den Blechen 201 ist jeweils eine elektrische Isolationsschicht 202 vorhanden, wie in Figur 2a dargestellt, um die Bleche 201 voneinander elektrisch zu isolieren. Diese elektrische Isolationsschicht 202 ist notwendig um die Wirbelstromverluste 101 zu vermeiden. Je schmaler die Bleche 201 sind, desto kleiner deren Querschnittsfläche, so dass der senkrecht zur Querschnittsfläche fließende magnetische Fluss 102 kleinere Wirbelströme 101 induziert.

Fig. 2a zeigt eine grafische Darstellung einer herkömmlichen Paketierung 200a von Elektroblech des Stators mit eingezeichneten Stanzgratbereichen 203.

Der Stator eines Elektromotors wird üblicherweise als Stator-Paket 200a aus einzelnen Blechen 201 gefertigt. Diese werden vorerst als Band oder Einzelbleche zum Werkzeug, z.B. einer Stanzmaschine, geführt. Im Stanzbereich drückt das Werkzeug entsprechend seiner Konturform Blechstücke aus dem Band oder Einzelblech. Im selben Arbeitsschritt oder alternativ auch im Nachgang werden die ausgedrückten bzw. ausgestanzten Blechstücke 201 über einander gestapelt und paketiert. Die Verbindung zwischen den Blechen 201 wird an bestimmten Stellen des Querschnitts realisiert, indem dort tiefer gestanzt wird und sich so die Bleche ineinander verkeilen. Dieser Vorgang wird auch Stanzpaketierung genannt. Das Blechpaket 200a dient dabei als magnetisch leitfähiger Pfad zur Flussführung und Halterung der Wicklung sowie als Wärmesenke für die entstehenden Verluste. Es wird derzeit versucht, einen Großteil der Verluste in axialer Richtung (z) zu den Endschildern des Motors abzuführen, um damit den passiven Kühleffekt des Motors zu erreichen.

Problematisch dabei ist die elektrische Isolationsschicht 202 zwischen den Blechen 201, wie in Figur 2a dargestellt. Diese ist notwendig um Wirbelstromverluste 101 zu vermeiden, wie in Figur 1a bis 1c dargestellt. Je schmaler die Bleche 201 sind, desto kleiner deren Querschnittsfläche, so dass der senkrecht zur Querschnittsfläche fließende magnetische Fluss 102 kleinere Wirbelströme 101 induziert, wie in Figur 1a bis 1c illustriert. Diese Isolationsschicht 202 ist tendenziell weniger leitfähig für Wärme, so dass eine axiale Wärmeabfuhr durch ein Blechpaket 200a schwieriger von statten geht. Ferner zu berücksichtigen ist der längere Wärmepfad bis zu den Lagerschildern, sodass eine nach außen radiale Abfuhr zu bevorzugen ist.

Zudem kann beim Stanzen ein Stanzgrat 203 an den Seiten entstehen, wie in der Figur 2a näher dargestellt, so dass Bleche 201 kurzgeschlossen werden können. In Figur 2a sind die Stellen mit Kreisen angedeutet, wo der Stanzgrat 203 entstehen kann und damit die Bleche 201 untereinander kurzschließen kann. Dies führt zu zusätzlichen frequenzabhängigen Ummagnetisierungs- und Wirbelstromverlusten. Hiervon betroffene Konturen sind vor allem im Bereich hoher magnetischer Flussführung, wie beispielsweise an den Zahnseiten und den Konturbereichen hin zu den Nuten der Maschine.

Fig. 2b zeigt eine grafische Darstellung eines erfindungsgemäßen Blechpakets 200b von Elektroblech des Stators gemäß einer beispielhaften Ausführungsform.

Die Erfindung basiert auf der Idee, die Blechquerschnitte (Q1 und Q2 in Figur 2b) abwechselnd an der Kontur größer und kleiner zu realisieren, so dass ein Überstand von einem Blech 201 zum anderen entsteht. Damit entsteht eine rillenförmige Oberfläche 204 an den Seiten des Blechpakets 200b.

Für die Stanzgratvermeidung empfohlene Konturen, welche mit einer solchen rillenförmigen Oberfläche 204 realisiert werden können, sind vor allem im Bereich hoher magnetischer Flussführung, wie beispielsweise an den Zahnseiten und den Konturbereichen hin zu den Nuten der Maschine. Hier sollte jedoch mit geringen Rillengrößen gearbeitet werden, um die Nuträume nicht zu stark einzuschränken.

Ein solches Blechpaket 200b kann als Stator eines elektrischen Antriebs genutzt werden, um ein rotierendes Magnetfeld zum Antreiben eines entlang einer Rotationsachse z rotierbaren magnetischen Rotors aufzubauen. Der Stator ist dabei aus dem Blechpaket 200b aus entlang der Rotationsachse z übereinander gestapelten Blechen 201 aufgebaut. Die Bleche 201 sind an ihren jeweiligen Oberseiten mit Isolationsschichten 202 überzogen, welche die Bleche 201 des Blechpakets 200b untereinander elektrisch isolieren. Dabei variieren die Bleche 201 in axialer Richtung z zwischen einem ersten Blechquerschnitt Q1 und einem zweiten Blechquerschnitt Q2, wie in Figur 2b dargestellt, so dass sich eine rillenförmige Außenkontur 204 des Blechpakets 200b ausformt.

Die Bleche 201 des Blechpakets 200b variieren dabei an der Außenkontur 204 abwechselnd zwischen dem ersten Blechquerschnitt Q1 und dem zweiten Blechquerschnitt Q2, so dass ein Überstand von einem Blech mit dem ersten Blechquerschnitt Q1 zu einem darauf folgenden Blech mit dem zweiten Blechquerschnitt Q2 entsteht. Dabei ist der erste Blechquerschnitt Q1 größer als der zweite Blechquerschnitt Q2, wie in Figur 2b dargestellt.

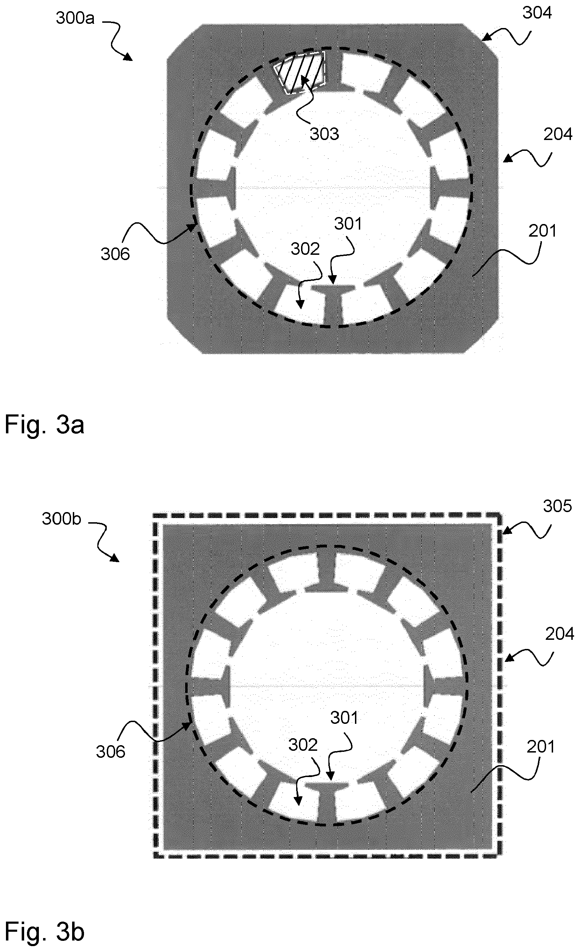

Fig. 3a zeigt eine grafische Darstellung eines erfindungsgemäßen Stator-Blechpakets 300a mit abgestumpften Ecken 304 gemäß einer beispielhaften Ausführungsform.

Das Stator-Blechpaket 300a ist im Schnitt dargestellt, wobei in dieser Ansicht ein einzelnes Blech 201 des Blechpakets 300a zu sehen ist. Die Rotationsachse z geht aus der Zeichenebene hinaus. Das Blechpaket 300a ist in axialer Richtung entsprechend dem Schichtaufbau der Figur 2b aufgebaut.

Das Blechpaket 300a ist so gefertigt, dass es eine kreisförmige Innenkontur 306 mit einer entlang der Innenkontur 306 ausgebildeten Mehrzahl von Zähnen 301 aufweist, auf welchen die Wicklungen (nicht in Figur 3a dargestellt) aufgebracht werden. Die Zähne 301 sind durch jeweilige Nuten 302 an der Innenkontur 306 voneinander beabstandet, in denen die Wicklungen eingebracht werden können. Die Bleche 201 formen eine rillenförmige Außenkontur 204 aus, wie in Figur 2b dargestellt. Aufgrund der Schnittdarstellung des Blechpakets 300a ist die rillenförmige Außenkontur 204 des Blechpakets 300a nicht sichtbar.

Die Bleche 201 des Blechpakets 300a formen im Bereich der Nuten 302 eine rillenförmige Innenkontur 303 des Blechpakets 300a aus, wie in Figur 3a beispielhaft für einen Nutbereich gestrichelt dargestellt. Diese rillenförmige Innenkontur 303 ist für alle Nutbereiche 302 realisiert.

Das Blechpaket 300a ist aus einzelnen Blechen 201 zusammengesetzt, welche jeweils abgestumpfte Ecken 304 aufweisen.

In einer Ausführungsform des Blechpakets 300a können die Rillen der Außenkontur 204 des Blechpakets 300a tiefer sein als Rillen der Innenkontur 303 des Blechpakets 300a.

Die Tiefe der Rillen an der rillenförmigen Innenkontur 303 des Blechpakets 300a, eine Breite der Zähne 301 und ein Nutraum im Bereich der Nuten 302 können in einem vorbestimmten Verhältnis zueinander stehen, das zu einem optimalen magnetischen Fluss führt.

In einer Ausführungsform des Blechpakets 300a kann die rillenförmige Innenkontur 303 im Bereich der Nuten 302 des Blechpakets 200b mit einer Isolationsschicht umspritzt sein, welche die in die Nuten 302 eingebrachten Wicklungen gegenüber dem Blechpaket 300a isoliert. Dabei kann die Isolationsschicht in die Rillen der Innenkontur 303 gespritzt sein und das Blechpaket 300a im Bereich der Nuten 302 luftdicht abdichten.

Fig. 3b zeigt eine grafische Darstellung eines erfindungsgemäßen Stator-Blechpakets 300b mit nicht abgestumpften Ecken 305 gemäß einer beispielhaften Ausführungsform. Das Stator-Blechpaket 300b der Figur 3b unterscheidet sich von dem Stator-Blechpaket 300a der Figur 3a darin, dass es nicht-abgestumpfte Ecken 305 aufweist.

Fig. 3b zeigt daher einen Stator-Querschnitt, welcher die Ecken 305 an der Außenkontur vorhanden hat. Auch hier kann der Vorteil der Oberflächenerhöhung zur Geltung kommen indem jedes zweite Blechstück 201 die Ecken 305 vorhanden hat und beispielsweise, einen um die gestrichelt eingezeichnete Linie größeren Querschnitt aufweist. Die Anordnung eines solchen Blechpakets 300b ist erst ab einer gewissen Stapelhöhe möglich, da die Lager-Endschilder in die abgestumpften Ecken 304 des Blechpakets 300a der Figur 3a greifen, um eine bessere Stabilität und Fixierung zu erreichen. Der Prozess des Stanzens der überstehenden Bleche sollte damit erst eingeleitet werden, nachdem die nötige Höhe erreicht wurde. Das gleiche gilt für die letzteren Bleche, da das gegenüberliegende Lager-Endschild ebenfalls in die abgestumpften Ecken greift.

In einer Ausführungsform können die Bleche 201 des Blechpakets 300a, 300b in axialer Richtung z abwechselnd aus einem viereckigen Blechstück 300b mit nicht abstumpften Ecken 305 (gemäß der Darstellung der Figur 3b) und einem viereckigen Blechstück 300a mit abgestumpften Ecken 304 (gemäß der Darstellung der Figur 3a) ausgebildet sein.

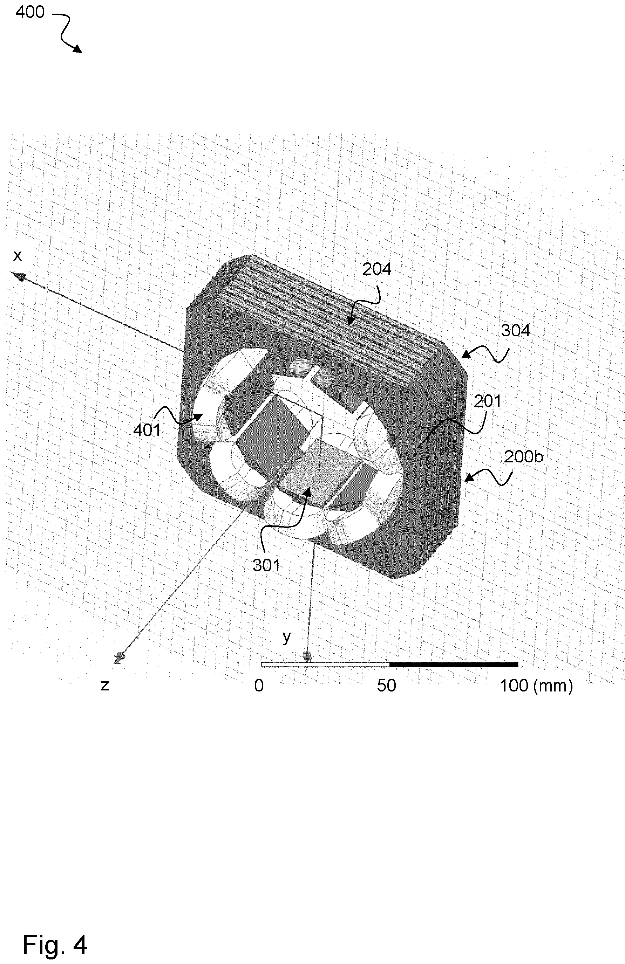

Fig. 4 zeigt eine grafische Darstellung eines erfindungsgemäßen Stators 400 mit Blechpaket 200b und stromführenden Wicklungen 401 gemäß einer beispielhaften Ausführungsform.

Der Stator 400 ist mit stromführenden Wicklungen 401 ausgestattet, welche ein rotierendes Magnetfeld aufbauen können, um einen entlang der Rotationsachse z rotierbaren magnetischen Rotor (nicht eingezeichnet in Figur 4) anzutreiben. Der Stator 400 ist aus einem Blechpaket, z.B. dem Blechpaket 200b gemäß Figur 2b oder dem Blechpaket 300a gemäß Figur 3a oder dem Blechpaket 300b gemäß Figur 3b, aufgebaut. Das Blechpaket ist aus entlang der Rotationsachse z übereinander gestapelter Bleche 201 aufgebaut. Dabei sind die Bleche 201 an ihren jeweiligen Oberseiten mit Isolationsschichten 202 überzogen, z.B. entsprechend der Darstellung in Figur 2b, welche die Bleche 201 des Blechpakets untereinander elektrisch isolieren. Die Bleche 201 des Blechpakets variieren in axialer Richtung z, d.h. in Richtung der Rotationsachse z, zwischen einem ersten Blechquerschnitt Q1 und einem zweiten Blechquerschnitt Q2, wie in Figur 2b näher dargestellt, so dass sich eine rillenförmige Außenkontur 204 des Blechpakets ausformt. In Figur 4 ist diese rillenförmige Außenkontur 204 gut erkennbar. Neben der Außenkontur 204 kann auch die Innenkontur im Bereich der Nuten gerillt sein, wie z.B. oben zu Figur 3a und 3b näher beschrieben.

In Figur 4 ist ein Maßstab dargestellt. Der Stator 400 kann daher einen Außendurchmesser von etwa 10 cm aufweisen. Die Blechdicke kann beispielsweise etwa 0,5 mm betragen. Eine Tiefe der Rillen an der Außenkontur 204 kann etwa bis 1 mm betragen. Es versteht sich, dass dies nur Anhaltspunkte sind, natürlich können auch beliebige andere Werte gewählt werden.

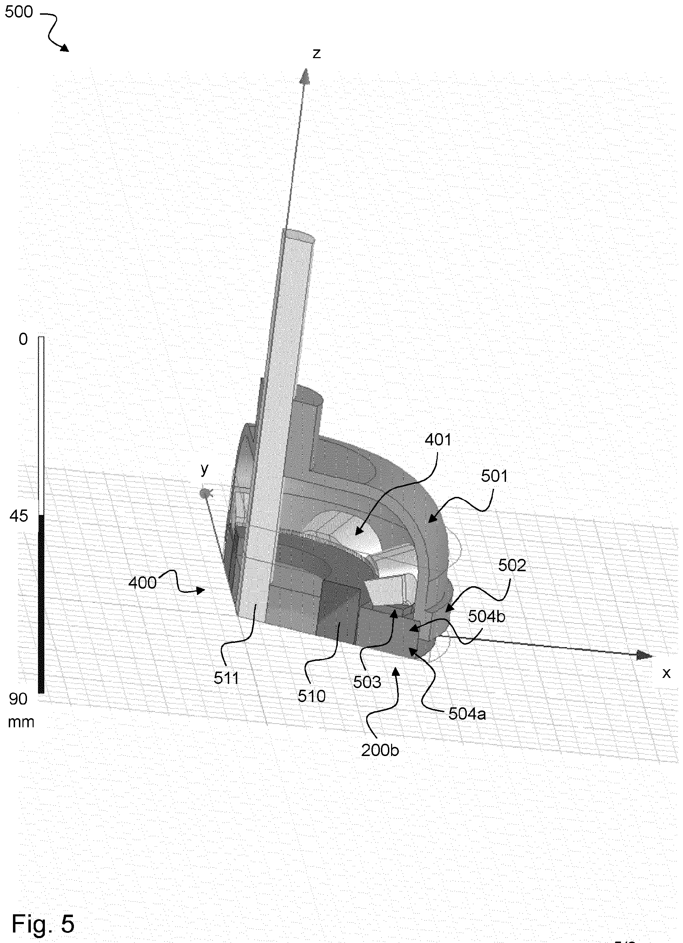

Fig. 5 zeigt eine Schnittdarstellung eines erfindungsgemäßen elektrischen Antriebs 500 mit Stator 400 aus Stator-Blechpaket 200b und stromführenden Wicklungen 401, Rotormagnet 510, Antriebswelle 511, nicht gerilltem Rotorblech zwischen Rotormagnet 510 und Antriebswelle 511 und Lagerendschild 501 gemäß einer beispielhaften Ausführungsform.

Der Stator 400 kann dem in Figur 4 beschriebenen Stator entsprechen. Der Stator 400 ist mit stromführenden Wicklungen 401 bzw. elektrischen Wicklungen 401 ausgestattet, welche dem Aufbau eines rotierenden Magnetfeldes zum Antreiben eines entlang einer Rotationsachse z rotierbaren magnetischen Rotors 510 dienen. Der Stator 400 ist aus einem Blechpaket 200b aus entlang der Rotationsachse z übereinander gestapelten Blechen 201 aufgebaut, wie oben zu den Figuren 2b, 3a, 3b und 4 beschrieben. Die Bleche 201 sind an ihren jeweiligen Oberseiten entsprechend der Darstellung in Figur 2b mit Isolationsschichten 202 überzogen, welche die Bleche 201 des Blechpakets 200b untereinander elektrisch isolieren. Die Bleche 201 des Blechpakets 200b variieren in axialer Richtung z zwischen einem ersten Blechquerschnitt Q1 und einem zweiten Blechquerschnitt Q2, wie in Figur 2b näher dargestellt, so dass sich eine rillenförmige Außenkontur 204 (nicht sichtbar in Figur 5) des Blechpakets 200b ausformt.

Der elektrische Antrieb weist ein Lagerendschild 501 auf, das den Stator 400 kopfseitig, d.h. in Richtung der z-Achse, umhüllt. Das Lagerendschild 501 greift stirnseitig, d.h. in Richtung der x-Achse und y-Achse, in das Blechpaket 200b des Stators 400 und fixiert damit das Blechpaket 200b über eine Flanschverbindung 502 mit dem Lagerendschild 501.

Die Bleche 201 des Blechpakets 200b formen außerhalb 504a des Bereichs der Flanschverbindung 502 eine rillenförmige Außenkontur 204 aus (nicht sichtbar in Figur 5).

In einer Ausführungsform des Blechpakets 200b formen die Bleche 201 des Blechpakets 200b im Bereich 504b der Flanschverbindung 502 eine ebene Außenkontur aus. Damit wird erreicht, dass die Flanschverbindung 502 in diesem Bereich 504b besonders gut haltbar ist, da hier keine Rillen die Festigkeit reduzieren können.

In einer alternativen Ausführungsform des Blechpakets 200b formen die Bleche 201 des Blechpakets sowohl im Bereich 504b der Flanschverbindung 502 als auch außerhalb 504a des Bereichs der Flanschverbindung 502 eine rillenförmige Außenkontur 204 aus. Solange die Rillen nicht zu tief sind, wird damit die Festigkeit der Flanschverbindung 502 nicht signifikant beeinträchtigt.

In einer Ausführungsform des Blechpakets 200b ist eine Rillentiefe der rillenförmigen Außenkontur 204 im Bereich der Flanschverbindung 502 weniger tief als eine Rillentiefe außerhalb 504a des Bereichs der Flanschverbindung 502. Damit lässt sich die Festigkeit der Flanschverbindung 502 beibehalten, wenn die Rillen im Bereich der Flanschverbindung nicht zu tief ausgebildet sind.

In einer Ausführungsform des Blechpakets 200b weisen die Bleche 201 des Blechpakets 200b im Bereich 504b der Flanschverbindung 502 abgestumpfte Ecken 304 auf, z.B. gemäß der Darstellung in Figur 3a, in welche das Lagerendschild 501 greift, und außerhalb 504a des Bereichs der Flanschverbindung 502 weisen die Bleche 201 nicht abgestumpfte Ecken 305 auf, z.B. gemäß der Darstellung in Figur 3b. Durch die abgestumpften Ecken im Bereich der Flanschverbindung kann das Lagerendschild 501 besser in das Blechpaket 200b eingreifen.

Durch die nicht abgestumpften Ecken 305 außerhalb 504a des Bereichs der Flanschverbindung 502 kann die Oberfläche erhöht werden, so dass die entstehende Wärme besser abgeführt werden kann und sich dadurch der Wirkungsgrad des Motors erhöht.

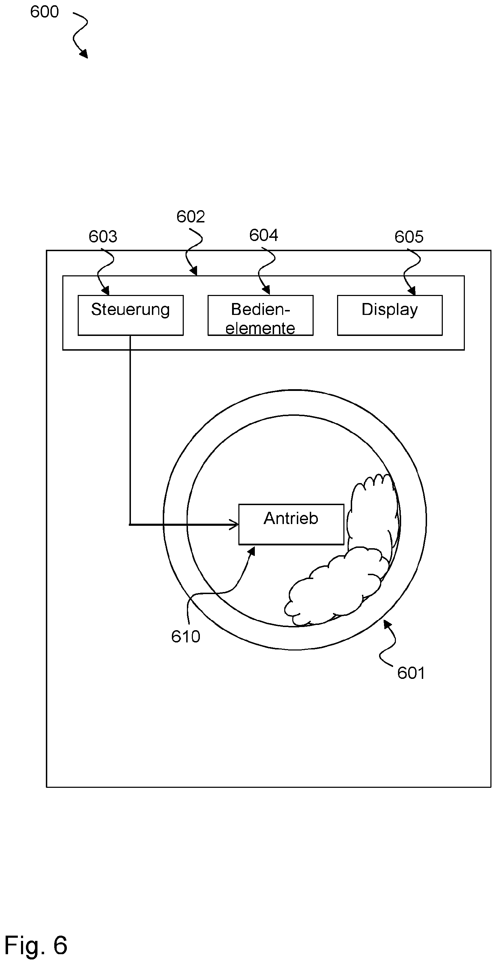

Fig. 6 zeigt eine schematische Darstellung eines Wäschepflegegeräts 600 mit elektrischem Antrieb 610 gemäß einer beispielhaften Ausführungsform.

Unter einem Wäschepflegegerät 600 wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

Das Wäschepflegegerät 600 umfasst einen Antrieb 610, beispielsweise einen Antrieb 500 gemäß der Darstellung in Fig. 5. Das Wäschepflegegerät 600 kann ferner eine Steuerung 603 umfassen, welche dazu dient, den elektrischen Antrieb 600 zu steuern oder zu regeln. Ferner können neben der Steuerung 603 Bedienelemente 604 zur Bedienung des Wäschepflegegeräts 600, meist über die Steuerung 603 sowie ein Display 605 zur Anzeige des Betriebszustands des Wäschepflegegeräts 600 vorhanden sein. Steuerung 603, Bedienelemente 604 und Display 605 können z.B. in (oder hinter) einem Armaturenbrett bzw. einer Bedienblende 602 des Wäschepflegegeräts 600 angeordnet sein.

Ein erfindungsgemäßes Wäschepflegegerät, welches einen elektrischen Antrieb mit einem Stator-Paket 200b entsprechend der Ausgestaltung in Figur 2b aufweist, kann beispielsweise wie im Folgenden beschrieben, realisiert sein.

Das Wäschepflegegerät 600 umfasst einen elektrischen Antrieb 610 mit einem mit stromführenden Wicklungen 401 ausgestatteten Stator 400 (z.B. gemäß der Darstellung in Figur 4 oder 5) zum Aufbau eines rotierenden Magnetfeldes zum Antreiben eines entlang einer Rotationsachse z rotierbaren magnetischen Rotors 510. Der Stator 400 ist aus einem Blechpaket 200b aus entlang der Rotationsachse z übereinander gestapelten Blechen 201 aufgebaut, wie z.B. in Figur 2b oder in den Figuren 3a und 3b näher dargestellt. Die Bleche 201 sind an ihren jeweiligen Oberseiten mit Isolationsschichten 202 überzogen, welche die Bleche 201 des Blechpakets 200b untereinander elektrisch isolieren, z.B. gemäß der Darstellung in Figur 2b. Die Bleche 201 des Blechpakets 200b variieren in axialer Richtung z zwischen einem ersten Blechquerschnitt Q1 und einem zweiten Blechquerschnitt Q2, z.B. gemäß der Darstellung in Figur 2b, so dass sich eine rillenförmige Außenkontur 204 des Blechpakets 200b ausformt.

Die Bleche 201 des Blechpakets 200b können an der Außenkontur 204 abwechselnd zwischen dem ersten Blechquerschnitt Q1 und dem zweiten Blechquerschnitt Q2 variieren, wie z.B. zu Figur 2b beschrieben, so dass ein Überstand von einem Blech mit dem ersten Blechquerschnitt Q1 zu einem darauf folgenden Blech mit dem zweiten Blechquerschnitt Q2 entsteht.

Der erste Blechquerschnitt Q1 kann beispielsweise größer sein als der zweite Blechquerschnitt Q2.

Das Blechpaket 200b kann eine kreisförmige Innenkontur 306 mit einer entlang der Innenkontur 306 ausgebildeten Mehrzahl von Zähnen 301 aufweisen, wie z.B. zu den Figuren 3a und 3b beschrieben, auf welchen die Wicklungen 401 aufgebracht sind. Die Zähne 301 können durch jeweilige Nuten 302 voneinander beabstandet sein, in denen die Wicklungen 401 eingebracht sind, wie z.B. in Figur 4 dargestellt. Die Bleche 201 des Blechpakets 200b können im Bereich der Nuten 302 eine rillenförmige Innenkontur 303 des Blechpakets 200b ausformen.

Die Rillen der Außenkontur 204 des Blechpakets 200b können tiefer sein als die Rillen der Innenkontur 303 des Blechpakets 200b.

Eine Tiefe der Rillen an der rillenförmigen Innenkontur 303 des Blechpakets 200b, eine Breite der Zähne 301 und ein Nutraum im Bereich der Nuten 302 können in einem vorbestimmten Verhältnis zueinander stehen, das zu einem optimalen magnetischen Fluss führt.

Die rillenförmige Innenkontur 303 im Bereich der Nuten 302 des Blechpakets 200b kann mit einer Isolationsschicht 503 umspritzt sein, wie z.B. in Figur 5 dargestellt, welche die in die Nuten 302 eingebrachten Wicklungen 401 gegenüber dem Blechpaket 200b isoliert.

Die Isolationsschicht 503 kann in die Rillen der Innenkontur 303 gespritzt sein und das Blechpaket 200b im Bereich der Nuten 302 luftdicht abdichten.

Die Bleche 201 des Blechpakets 200b können in axialer Richtung z abwechselnd aus einem viereckigen Blechstück 300b mit nicht abgestumpften Ecken 305 und einem viereckigen Blechstück 300a mit abgestumpften Ecken 304 ausgebildet sein, wie z.B. zu Figur 3a und 3b beschrieben.

Der elektrische Antrieb 610 kann ein Lagerendschild 501 aufweisen, wie z.B. zu Figur 5 beschrieben, das den Stator 400 kopfseitig umhüllt, wobei das Lagerendschild 501 stirnseitig in das Blechpaket 200b des Stators 400 greift und das Blechpaket 200b über eine Flanschverbindung 502 fixiert.

Die Bleche 201 des Blechpakets 200b können außerhalb 504a des Bereichs der Flanschverbindung 502 eine rillenförmige Außenkontur 204 ausformen. Die Bleche 201 des Blechpakets 200b können im Bereich 504b der Flanschverbindung 502 eine ebene Außenkontur ausformen.

Alternativ können die Bleche 201 des Blechpakets 200b sowohl im Bereich 504b der Flanschverbindung 502 als auch außerhalb 504a des Bereichs der Flanschverbindung 502 eine rillenförmige Außenkontur 204 ausformen.

Beispielsweise kann eine Rillentiefe der rillenförmigen Außenkontur 204 im Bereich der Flanschverbindung 502 weniger tief sein als eine Rillentiefe außerhalb 504a des Bereichs der Flanschverbindung 502, wie näher zu Figur 5 erläutert.

Die Bleche 201 des Blechpakets 200b können im Bereich 504b der Flanschverbindung 502 abgestumpfte Ecken 304 aufweisen, in welche das Lagerendschild 501 greift, und außerhalb 504a des Bereichs der Flanschverbindung 502 nicht abgestumpfte Ecken 305 aufweisen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100a: Blechpaket aufgebaut aus einem Blech
- 100b: Blechpaket aufgebaut aus zwei Blechen
- 100c: Blechpaket aufgebaut aus drei Blechen
- 101: Wirbelströme
- 102: magnetischer Fluss

- 200a: Blechpaket
- 201: einzelne Bleche
- 202: Isolationsschichten der jeweiligen Bleche 201
- 203: Grate bzw. Stanzgrate
- 200b: Blechpaket
- Q1: erster (größerer) Querschnitt
- Q2: zweiter (kleinerer) Querschnitt
- 204: rillenförmige Außenkontur
- z:: Rotationsachse

- 300a: Blechpaket mit abgestumpften Ecken 304
- 301: Zähne am Stator
- 302: Nuten
- 306: Innenkontur mit Nuten und Zähnen
- 304: abgestumpfte Ecken

- 300b: Blechpaket mit nicht abgestumpften Ecken 305
- 305: nicht abgestumpfte Ecken

- 400: Stator
- 401: Wicklungen
- z:: Rotationsachse
- x, y:: Achsen, welche die radiale Richtung angeben

- 500: elektrischer Antrieb
- 501: Lagerendschild
- 502: Flanschverbindung
- 503: Isolationsschicht
- 504a: Bereich des Blechpakets außerhalb der Flanschverbindung
- 504b: Bereich des Blechpakets im Bereich der Flanschverbindung
- 511: Antriebswelle

- 600: Wäschepflegegerät, z.B. Waschmaschine
- 601: Trommel
- 602: Armaturenbrett
- 603: Steuerung
- 604: Bedienelemente
- 605: Display
- 610: Antrieb, elektrischer Antrieb

## Patentansprüche

1. Wäschepflegegerät (600) umfassend einen elektrischen Antrieb (610) mit einem mit stromführenden Wicklungen (401) ausgestatteten Stator (400) zum Aufbau eines rotierenden Magnetfeldes zum Antreiben eines entlang einer Rotationsachse (z) rotierbaren magnetischen Rotors (510),
wobei der Stator (400) aus einem Blechpaket (200b) aus entlang der Rotationsachse (z) übereinander gestapelten Blechen (201) aufgebaut ist,
wobei die Bleche (201) an ihren jeweiligen Oberseiten mit Isolationsschichten (202) überzogen sind, welche die Bleche (201) des Blechpakets (200b) untereinander elektrisch isolieren,
**dadurch gekennzeichnet, dass**
die Bleche (201) des Blechpakets (200b) in axialer Richtung (z) zwischen einem ersten Blechquerschnitt (Q1) und einem zweiten Blechquerschnitt (Q2) variieren, so dass sich eine rillenförmige Außenkontur (204) des Blechpakets (200b) ausformt.

2. Wäschepflegegerät (600) nach Anspruch 1,
**dadurch gekennzeichnet, dass**
die Bleche (201) des Blechpakets (200b) an der Außenkontur (204) abwechselnd zwischen dem ersten Blechquerschnitt (Q1) und dem zweiten Blechquerschnitt (Q2) variieren, so dass ein Überstand von einem Blech mit dem ersten Blechquerschnitt (Q1) zu einem darauf folgenden Blech mit dem zweiten Blechquerschnitt (Q2) entsteht.

3. Wäschepflegegerät (600) nach Anspruch 1 oder 2,
**dadurch gekennzeichnet, dass**
der erste Blechquerschnitt (Q1) größer als der zweite Blechquerschnitt (Q2) ist.

4. Wäschepflegegerät (600) nach einem der vorstehenden Ansprüche,
wobei das Blechpaket (200b) eine kreisförmige Innenkontur (306) mit einer entlang der Innenkontor (306) ausgebildeten Mehrzahl von Zähnen (301) aufweist, auf welchen die Wicklungen (401) aufgebracht sind, wobei die Zähne (301) durch jeweilige Nuten (302) voneinander beabstandet sind, in denen die Wicklungen (401) eingebracht sind,
**dadurch gekennzeichnet, dass**
die Bleche (201) des Blechpakets (200b) im Bereich der Nuten (302) eine rillenförmige Innenkontur (303) des Blechpakets (200b) ausformen.

5. Wäschepflegegerät (600) nach Anspruch 4,
**dadurch gekennzeichnet, dass**
Rillen der Außenkontur (204) des Blechpakets (200b) tiefer sind als Rillen der Innenkontur (303) des Blechpakets (200b).

6. Wäschepflegegerät (600) nach Anspruch 4 oder 5,
**dadurch gekennzeichnet, dass**
eine Tiefe der Rillen an der rillenförmigen Innenkontur (303) des Blechpakets (200b), eine Breite der Zähne (301) und ein Nutraum im Bereich der Nuten (302) in einem vorbestimmten Verhältnis zueinander stehen, das zu einem optimalen Kompromiss zwischen Wärmeabfuhr und magnetischer Flussleitfähigkeit führt.

7. Wäschepflegegerät (600) nach einem der Ansprüche 4 bis 6,
**dadurch gekennzeichnet, dass**
die rillenförmige Innenkontur (303) im Bereich der Nuten (302) des Blechpakets (200b) mit einer Isolationsschicht (503) umspritzt ist, welche die in die Nuten (302) eingebrachten Wicklungen (401) gegenüber dem Blechpaket (200b) isoliert.

8. Wäschepflegegerät (600) nach Anspruch 7,
**dadurch gekennzeichnet, dass**
die Isolationsschicht (503) in die Rillen der Innenkontur (303) gespritzt ist und das Blechpaket (200b) im Bereich der Nuten (302) luftdicht abdichtet, so dass sich eine thermische Kopplung zwischen den Wicklungen (401) und den Blechen (201) des Blechpakets (200b) verbessert.

9. Wäschepflegegerät (600) nach einem der vorstehenden Ansprüche,
**dadurch gekennzeichnet, dass**
die Bleche (201) des Blechpakets (200b) in axialer Richtung (z) abwechselnd aus einem viereckigen Blechstück (300a) mit abgestumpften Ecken (304) oder einem viereckigen Blechstück (300b) mit nicht abstumpften Ecken (305) oder weniger abgestumpften Ecken ausgebildet sind.

10. Wäschepflegegerät (600) nach einem der vorstehenden Ansprüche,
wobei der elektrische Antrieb (610) ein Lagerendschild (501) aufweist, das den Stator (400) kopfseitig umhüllt, wobei das Lagerendschild (501) stirnseitig in das Blechpaket (200b) des Stators (400) greift und das Blechpaket (200b) über eine Flanschverbindung (502) fixiert,
**dadurch gekennzeichnet, dass**
die Bleche (201) des Blechpakets (200b) außerhalb (504a) des Bereichs der Flanschverbindung (502) eine rillenförmige Außenkontur (204) ausformen.

11. Wäschepflegegerät (600) nach Anspruch 10,
**dadurch gekennzeichnet, dass**
die Bleche (201) des Blechpakets (200b) im Bereich (504b) der Flanschverbindung (502) eine ebene Außenkontur ausformen.

12. Wäschepflegegerät (600) nach Anspruch 10,
**dadurch gekennzeichnet, dass**
die Bleche (201) des Blechpakets (200b) sowohl im Bereich (504b) der Flanschverbindung (502) als auch außerhalb (504a) des Bereichs der Flanschverbindung (502) eine rillenförmige Außenkontur (204) ausformen.

13. Wäschepflegegerät (600) nach Anspruch 12,
**dadurch gekennzeichnet, dass**
eine Rillentiefe der rillenförmigen Außenkontur (204) im Bereich der Flanschverbindung (502) weniger tief ist als eine Rillentiefe außerhalb (504a) des Bereichs der Flanschverbindung (502).

14. Wäschepflegegerät (600) nach einem der Ansprüche 10 bis 13,
**dadurch gekennzeichnet, dass**
die Bleche (201) des Blechpakets (200b) im Bereich (504b) der Flanschverbindung (502) abgestumpfte Ecken (304) aufweisen, in welche das Lagerendschild (501) greift, und außerhalb (504a) des Bereichs der Flanschverbindung (502) nicht abgestumpfte Ecken (305) oder abwechselnd weniger abgestumpfte Ecken aufweisen.

15. Elektrischer Antrieb (610) für ein Wäschepflegegerät (600), wobei der elektrische Antrieb (610) folgendes umfasst:
einen mit stromführenden Wicklungen (401) ausgestatteten Stator (400) zum Aufbau eines rotierenden Magnetfeldes; und
einen entlang einer Rotationsachse (z) rotierbaren magnetischen Rotor (510), der durch das rotierende Magnetfeld des Stators (400) angetrieben wird,
wobei der Stator (400) aus einem Blechpaket (200b) entlang der Rotationsachse (z) übereinander gestapelter Bleche (201) aufgebaut ist,
wobei die Bleche (201) an ihren jeweiligen Oberseiten mit Isolationsschichten (202) überzogen sind, welche die Bleche (201) des Blechpakets (200b) untereinander elektrisch isolieren,
**dadurch gekennzeichnet, dass**
die Bleche (201) des Blechpakets (200b) in axialer Richtung (z) zwischen einem ersten Blechquerschnitt (Q1) und einem zweiten Blechquerschnitt (Q2) variieren, so dass sich eine rillenförmige Außenkontur (204) des Blechpakets (200b) ausformt.
